# EUROPÄISCHE PATENTSCHRIFT

(11) **EP 1 681 531 B1**
(45) Veröffentlichungstag und Bekanntmachung des Hinweises auf die Patenterteilung: **23.04.2008**
(21) Anmeldenummer: 05000561.0
(22) Anmeldetag: 13.01.2005
(51) Int. Cl.: G01B 7/06

(54) **Vorrichtung und Verfahren zur kapazitiven Vermessung von Materialien**
Device and method for the capacitive measurement of materials
Appareil et méthode pour la mesure capacitive des matériaux

(43) Veröffentlichungstag der Anmeldung: 19.07.2006
(73) Patentinhaber: Plast-Control GmbH, 42899 Remscheid (DE)
(72) Erfinder: Konermann, Stefan, 42897 Remscheid (DE); Stein, Markus, 58285 Gevelsberg (DE)
(74) Vertreter: Wiebusch, Manfred

(56) Entgegenhaltungen:
- DE-A1- 10 242 175
- US-B1- 6 318 153

## Beschreibung

Die Erfindung betrifft ein Verfahren und eine Vorrichtung zur Messung von Dicken einer Folie, eines Filmes oder einer Materiallage mit Hilfe eines beabstandet zu der Folie angeordneten Meßkopfes, mit dem eine kapazitive Dickenmessung vorgenommen wird.

Verfahren zur Messung von Foliendicken werden insbesondere bei der Herstellung von Kunststoffolien eingesetzt, damit die Foliendicke und gegebenenfalls die Gleichmäßigkeit der Foliendicke auf der Breite der Folie während des Herstellungsprozesses überwacht und erforderlichenfalls geregelt werden kann. Beispielsweise ist bei einer Blasfolienanlage der Meßkopf so an der durch Innenblasluft aufgeblasenen und nach oben abgezogenen Folienblase angeordnet, daß er um die Folienblase umlaufen und so während eines Umlaufs die Foliendicke auf dem gesamten Umfang der Folienblase messen kann. Da es insbesondere bei Blasfolien schwierig wäre, Komponenten des Meßkopfes auf beiden Seiten der Folie anzuordnen oder eine metallische Unterlage oder Gegenwalze auf einer Rückseite der Folie anzuordnen, sollte der Meßkopf so gestaltet sein, daß die Messung von einer Seite der aufgeblasenen Folie aus erfolgen kann.

Es sind Meßverfahren bekannt, die dieses Merkmal nicht erfüllen. So beschreibt DE 199 59 570 A1 einen Sensor zum berührenden Vermessen von Materialien, bei dem das Meßgut auf einer Unterlage geführt ist und auf dem Meßgut eine in einem Käfig geführte Kugel mit geringer Auflagekraft abrollt. Eine Höhenverlagerung der Kugel innerhalb des Käfigs wird durch Laser-Triangulation gemessen, während zugleich der Abstand des Käfigs von der metallischen Unterlage mit einem Wirbelstromsensor gemessen wird. Durch Addition der Meßwerte ergibt sich die Dicke des Meßgutes. Nachteilig sind einerseits die notwendige metallische Unterlage und andererseits die Berührung des Meßgutes durch die Kugel.

Im Handel erhältlich sind außerdem Meßgeräte der Firma Micro Epsilon, bei denen ebenfalls Wirbelstrommessung zur Bestimmung des Abstandes eines Sensors von einer metallischen Auflagewalze erfolgt, auf der die Folie aufliegt, während je nach Gerät zusätzlich eine Messung des Abstandes zwischen einer Folienoberfläche und dem Sensor mit einem Lasermikrometer erfolgt oder eine kapazitive Messung einer Foliendicke erfolgt. Bei der sehr abstandssensitiven kapazitiven Messung soll der aus der Wirbelstrommessung gewonnene Abstandswert zur Kompensation von Abstandsschwankungen dienen. Nachteilig ist in jedem Fall die notwendige metallische Auflagewalze. Bei einem weiteren, bekannten Meßverfahren für Dicken von profilierten Materialien ist beidseitig eines Meßspaltes je ein laseroptischer Triangulationssensor zur Abtastung der Materialoberfläche angeordnet. Aus den Meßwerten wird die Dicke des durch den Meßspalt geführten Materials bestimmt, wobei zusätzlich mittels Wirbelstrommessung die Breite des Meßspaltes überwacht wird. Nachteilig ist hier, daß auf beiden Seiten des Materials ein Triangulationssensor erforderlich ist.

Aus DE 36 12 914 A1 ist ein Verfahren zur Messung der Dicke von Papier bekannt, bei dem ein Luftkissen für einen gleichbleibenden Abstand zwischen einer auf einer Unterlage angeordneten Papieroberfläche und einem Meßkopf sorgt, während gleichzeitig mit einem induktiven Wegaufnehmer der Abstand des Meßkopfes von der Unterlage bestimmt wird. Nachteilig ist insbesondere wiederum die notwendige Unterlage. Außerdem ist die Genauigkeit der Messung durch Schwankungen der Dicke des Luftkissens beschränkt.

Ein kapazitives Verfahren, bei dem einseitig eine berührungslose Dickenmessung einer Folie erfolgt, während der Meßkopf durch ein Luftpolster in Abstand zu der Folie gehalten wird, ist aus EP 0 591 239 und GB 1 436 698 bekannt. Dabei wird zwischen dem Meßkopf und der Folie ein Luftkissen erzeugt, beispielsweise durch Zufuhr eines Druckgases, und der Meßkopf wird durch das Luftkissen in einem annähernd konstanten Abstand zur Oberfläche gehalten. Dadurch wird eine Berührung der Folie mit dem Meßkopf verhindert.

Bei einer einseitigen kapazitiven Dickenmessung wird der Effekt ausgenutzt, daß die nicht elektrisch leitende Folie als Dielektrikum im Randfeld eines Plattenkondensators wirkt. Eine Änderung der Foliendicke entspricht somit einer Änderung der Kapazität des Kondensators. Problematisch ist, daß eine Änderung des Abstandes zwischen der Folie und der kapazitiven Meßeinrichtung die Kapazitätsmessung und damit die Dickenmessung verfälscht, wobei der Meßfehler von gleicher Größenordnung wie die gemessene Foliendicke sein kann. Dieser störende Einfluß von Abstandsänderungen wird um so stärker, je größer der Abstand zwischen dem Meßkopf und der Folie wird, da die Felddichte des Kondensators mit größerem Abstand stärker abnimmt. Bei der Herstellung von Blasfolien ergeben sich jedoch durch die Bewegungen der Folie unvermeidlich Schwankungen des Abstandes zwischen dem Meßkopf und der Folie. Diese beeinträchtigen die kapazitive Messung und führen zu falschen Meßergebnissen.

Aus DE 195 11 939 ist ein Sensorkopf bekannt, der reibungsfrei in einer Halterung eines Sensors gelagert ist. Dabei wird über eine Gaszufuhröffnung am Meßkopf Gas zugeführt, das zwischen dem Meßkopf und der Folie seitlich wegströmt, so daß sich ein Gleichgewicht zwischen der abstoßenden Wirkung des Gasdruckes und der Ansaugwirkung durch das strömende Gas einstellt. Der Meßkopf wird dadurch in im wesentlichen gleichbleibenden Abstand zur Folie gehalten. Zusätzlich zu dieser Feineinstellung des Abstandes wird eine automatische Grobeinstellung der Position des Meßkopfes mittels eines Abstandssensors vorgeschlagen, der beispielsweise optisch, mit Ultraschall oder ebenfalls kapazitiv arbeiten soll. Nachteilig ist bei diesem Meßkopf zum einen, daß vorausgesetzt wird, daß im sich einstellenden Abstandsbereich die kapazitive Dickenmessung möglichst abstandsunabhängig sein soll. Zum anderen ist die reibungsfreie Lagerung des Meßkopfes sehr aufwendig. Außerdem folgt der Sensorkopf der Folie wegen seiner Massenträgheit nicht immer ausreichend schnell, so daß der zulässige Abstandsbereich verlassen werden kann.

Ein ähnlicher Sensorkopf ist aus US 6 318 153 B1 bekannt. Die Grobeinstellung erfolgt mittels eines PID-Reglers, der einen Aktuator zur Verschiebung des Sensorkopfes in seiner Halterung ansteuert.

Aus EP 0 801 290 ist ein Verfahren bekannt, bei dem ebenfalls ein Luftkissen zwischen dem Meßkopf und der Folie erzeugt wird. Eine aktive Regelung des Abstandes zwischen dem Meßkopf und der Folie erfolgt indirekt dadurch, daß der Druck im Luftkissen zwischen dem Meßkopf und der Folie gemessen und geregelt wird. Die Steuerung des Drucks zur Einregelung eines Referenzdruckes erfolgt dabei durch die Verschiebung der Position des Meßkopfes mittels eines Linearmotors. Zusätzlich oder anstelle der Regelung des Druckes soll mittels aus den Druckmessungen gewonnenen Abstandsdaten eine Korrektur von abstandsabhängigen kapazitiven Dickenmessungen der Folie erfolgen. Dazu wird ein einfacher, funktionaler Zusammenhang zwischen der Größe des Meßfehlers und dem Abstand zwischen dem Meßkopf und der Folie angenommen. Demgemäß steht die im Abstand x gemessene Dicke d(x) mit der im Abstand x=0 gemessenen Dicke do im Zusammenhang d(x)=d₀/(1+x). Nachteilig ist der hohe Aufwand für die Druckmessung, die außerdem nur indirekt und unsicher auf den Abstand zwischen dem Meßkopf und der Folie schließen läßt und von der Bahngeschwindigkeit, der Wölbung und der Oberflächenbeschaffenheit der Folie abhängt. Die Positionierung des Meßkopfes beeinflußt nur indirekt und mit Zeitverzögerung den Druck im Luftkissen, und die Massenträgheit des Meßkopfes erschwert zudem eine schnelle und exakte Positionierung des Meßkopfes. Daher kann bei bestimmten Betriebszuständen einer Blasfolienanlage unter Umständen der einzuregelnde Referenzdruck nicht stabil erreicht werden.

Aufgabe der Erfindung ist es, ein Verfahren und eine Vorrichtung zu schaffen, mit denen eine genauere und fehlerfreie berührungslose Dickenmessung ermöglicht wird.

Diese Aufgabe wird bei einem Verfahren der eingangs genannten Art dadurch gelöst, daß mit einer Abstandsmeßeinrichtung eine optische Abstandsmessung erfolgt und ein bei der optischen Abstandsmessung bestimmter Abstand bei der kapazitiven Dikkenmessung in die Messung der Foliendicke eingeht. Bei der optischen Abstandsmessung wird der Abstand zwischen der Folie und dem Meßkopf direkt gemessen.

Der bei der optischen Abstandsmessung bestimmte Abstand geht unter Berücksichtigung einer vorbekannten Abstandsabhängigkeit der Dickenmessungen in die Messung der Foliendicke ein. Beispielsweise kann die Abstandsabhängigkeit der Dickenmessungen bei einem gegebenen Meßkopf nach der Herstellung des Meßkopfes vermessen werden. Auf diese Weise kann eine sehr genaue Dickenmessung erfolgen, da Schwankungen des Abstandes zwischen dem Meßkopf und der Folie in einem gewissen Maße unkritisch sind. Außerdem ist die optische Abstandsmessung eine echte, direkte Messung des Abstandes und ist somit beispielsweise unabhängig von der Bahngeschwindigkeit. Ferner ermöglicht das erfindungsgemäße Verfahren einen einfachen Aufbau des Meßkopfes und seiner Aufhängung oder Führung.

Damit näherungsweise ein konstanter Abstand über die Meßfläche der kapazitiven Dickenmessung angenommen werden kann, ist die kapazitive Dickenmeßeinrichtung vorzugsweise so ausgebildet, daß die kapazitive Dickenmessung auf einer möglichst kleinen Meßfläche erfolgt. Die optische Abstandsmessung erfolgt dann vorzugsweise im Bereich dieser Meßfläche. Alternativ können bei einer größeren Meßfläche mehrere optische Abstandsmessungen an verschieden Stellen erfolgen, beispielsweise mittels eines Multiplexers.

Vorteilhafte Ausgestaltungen der Erfindung ergeben sich aus den Unteransprüchen.

Vorzugsweise weist der Meßkopf eine Zufuhröffnung für Gas oder Luft zur Erzeugung eines Gas- oder Luftkissens zwischen dem Meßkopf und der Folie auf. Durch ein solches Luftkissen ergibt sich eine gewisse Selbstregulierung des Abstandes zwischen dem Meßkopf und der Folie.

Vorzugsweise ist mindestens eine Sensoroptik der Abstandsmeßeinrichtung in den Meßkopf integriert. Eine Anordnung der Abstandsmeßeinrichtung nahe an der Dikkenmeßeinrichtung hat den Vorteil, daß der Abstand unmittelbar in der Nähe des Ortes der Dickenmessung gemessen wird, und trägt so zu Erhöhung der Genauigkeit der Dickenmessung bei.

In einer besonders bevorzugten Ausführungsform ist die optische Abstandsmessung eine chromatische Abstandsmessung. Für diese ist lediglich eine einzige Meßöffnung am Meßkopf notwendig. Die chromatische Abstandsmessung erfolgt beispielsweise mit Weißlicht und einer Optik, bei der die unterschiedlichen Wellenlängen des Lichtes in unterschiedlichen Abständen vor der Meßöffnung fokussiert werden. Die chromatische Abstandsmessung hat den besonderen Vorteil, daß sie robust gegenüber Wölbungen oder Krümmungen der Folienoberfläche ist und beispielsweise einen Winkelversatz von bis zu +/- 30° zuläßt. Außerdem ist sie unempfindlich gegenüber Riefen oder Streifen auf der Folie, der Rauhigkeit der Folie und ihrer Bahngeschwindigkeit.

Hinter der Meßöffnung weist der Meßkopf vorzugsweise einen Meßraum der optischen Abstandsmeßeinrichtung auf, welcher eine Einrichtung zur Zuführung von Gas oder Luft zum Spülen der Meßöffnung aufweist. Dadurch kann der vorne an der Meßöffung offene Meßraum der optischen Abstandsmeßeinrichtung beispielsweise unter einem leichten Überdruck in Bezug auf den Bereich vor dem Meßkopf gehalten werden, so daß keine Verunreinigungen durch die Meßöffnung eintreten.

Im folgenden wird ein bevorzugtes Ausführungsbeispiel anhand der Zeichnung näher erläutert.

Es zeigen:
- Figur 1: eine schematische Darstellung eines Meßkopfes an einer Folienblase;
- Figur 2: eine Vorderansicht des Meßkopfes;
- Figur 3: eine Detailansicht des Meßkopfes;
- Fig. 4 u. 5: Vorderansichten von zwei Varianten des Meßkopfes; und
- Figur 6: eine schematische Darstellung einer modifizierten Ausführungsform des Meßkopfes.

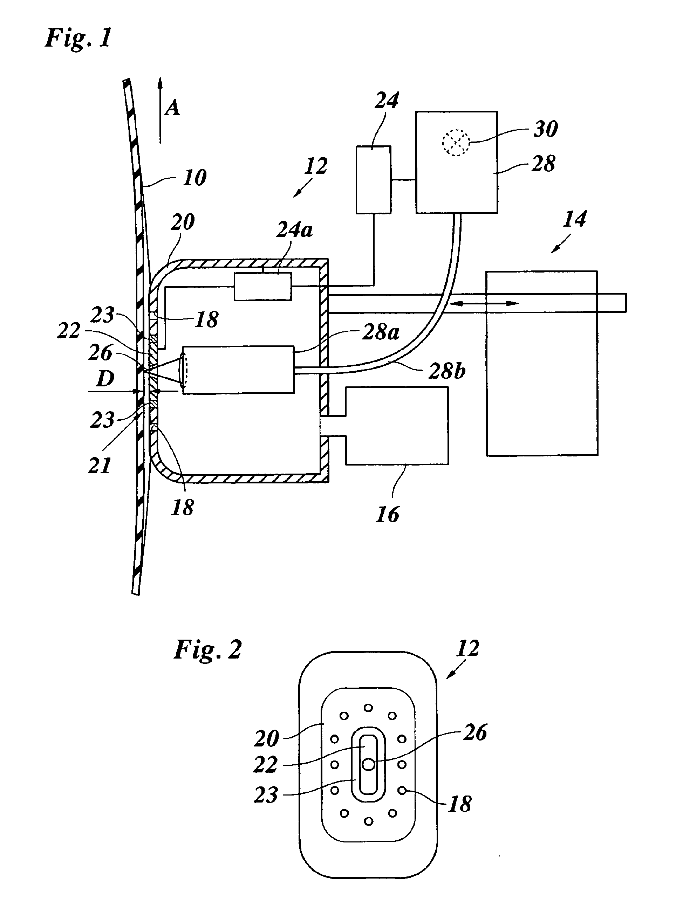

In Figur 1 ist in einem vertikalen Schnitt ein Teil einer schlauchförmigen Folie 10 gezeigt, die aus einem Extrusionswerkzeug extrudiert, durch Innenluft zu einer Folienblase aufgeblasen und in der mit einem Pfeil A gekennzeichneten Richtung abgezogen wird. Zur Messung der Dicke der Folie 10 ist ein Meßkopf 12 vorgesehen, der an seiner der Folie 10 zugewandten Vorderseite abgerundet ist, um eine Verletzung der Folie 10 zu vermeiden.

Während der Messung wird der Meßkopf 12 durch eine Positionierungseinrichtung 14 vor der Folie 10 gehalten, und es wird von einer Drucklufterzeugungseinrichtung 16 Druckluft erzeugt, die über Zufuhröffnungen 18 an der Vorderseite des hohlen Meßkopfes 12 ausströmt und für den Aufbau eines Luftkissens zwischen dem Meßkopf 12 und der Folie 10 sorgt. Durch die Positionierungseinrichtung 14 wird der Meßkopf 12 in einer Position gehalten, in der er mit dem Luftkissen die Folie 10 etwas auslenkt. Der Innendruck der Folienblase sorgt dann dafür, daß sich die Folie 10 im wesentlichen gerade entlang der Vorderseite des Meßkopfes 12 entlangbewegt, so daß eine annähernd gleichmäßige Dicke des Luftkissens und damit ein annähernd gleichmäßiger Abstand D zwischen der Vorderseite des Meßkopfes 12 und der Oberfläche der Folie 10 gegeben ist.

Ein Gehäuse 20 des Meßkopfes 12 bildet eine erste Elektrode eines Meßkondensators 21 und ist an der Vorderseite des Meßkopfes 12 etwa mittig mit einer Aussparung versehen, in der eine plattenförmige zweite Elektrode 22 angeordnet ist. Der Kondensatorspalt zwischen der Elektrode 22 und dem Gehäuse 20 ist von einem Isolator 23 verschlossen. Figur 2 zeigt die längliche, annähernd ovale Form der Elektrode 22, die von dem Isolator 23 umgeben ist. Die Luft-Zufuhröffnungen 18 sind in einem Ring um den Isolator 23 herum in dem Gehäuse 20 angeordnet.

Die Kapazität des Meßkondensators 21 wird durch die Dielektrizität der vor dem Meßkopf 12 angeordneten Folie 10 beeinflußt. Der Meßkondensator 21 ist über eine Meßelektronik 24a mit einer Meßeinheit 24 verbunden und bildet zusammen mit dieser eine kapazitive Dickenmeßeinrichtung. Das Grundprinzip der kapazitiven Dikkenmessung ist bekannt und soll deshalb hier nicht näher erläutert werden. Das Randfeld des Meßkondensators 21 durchdringt im wesentlichen einen Bereich von 1 mm vor der Vorderseite des Meßkopfes 12.

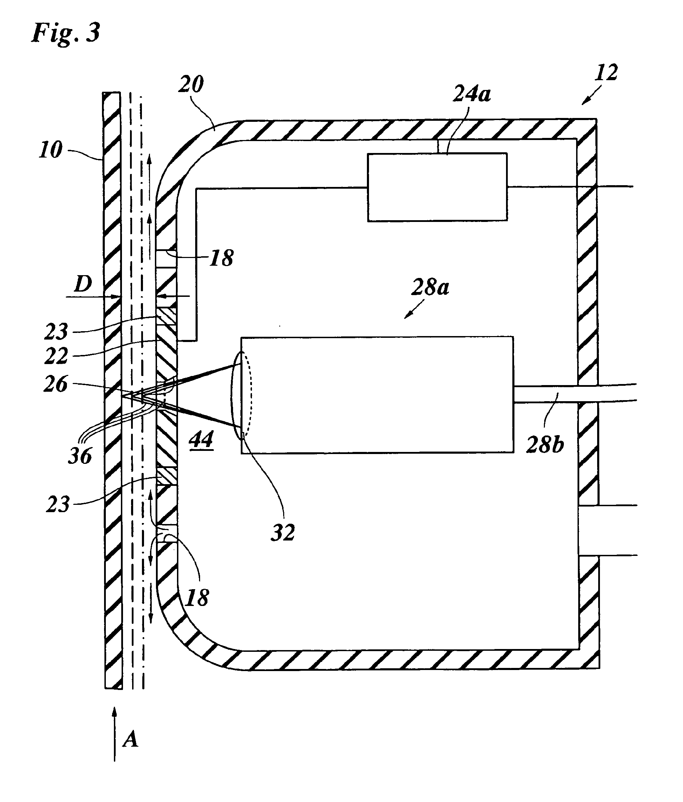

In der Mitte der Vorderseite des Meßkopfes 12 ist in der Mitte der Elektrode 22 eine Meßöffnung 26 einer Sensoroptik 28a einer optischen Abstandsmeßeinrichtung 28 angeordnet. Die Sensoroptik 28a ist über ein Glasfaserkabel 28b angeschlossen. Der Durchmesser der Meßöffnung 26 beträgt beispielsweise lediglich 0,5 mm. Die optische Abstandsmeßeinrichtung 28 mißt optisch den Abstand D zwischen dem Meßkopf 12 und der Folie 10 und ist mit der Meßeinheit 24 der Dickenmeßeinrichtung zur Übermittlung des gemessenen Abstandes D verbunden. Die optische Abstandsmessung wird weiter unten anhand von Figur 3 näher erläutert.

Die Positionierungseinrichtung 14 wird beispielsweise durch den Meßwert der optischen Abstandsmeßeinrichtung 28 gesteuert, so daß der gemessene Abstand D gegen einen Sollwert geregelt wird. Alternativ oder zusätzlich kann beispielsweise ein Ultraschall-Abstandssensor oder eine sonstiges Regelelement zur Ansteuerung der Positionierungseinrichtung 14 vorgesehen sein. Denkbar ist beispielsweise eine Regelung der Anpreßkraft, mit der der Meßkopf 12 gegen die Folie 10 gedrückt wird, analog zu dem aus EP 1 191 305 bekannten Verfahren.

In der Meßeinheit 24 sind Daten zur Abstandsabhängigkeit der Dickenmessungen gespeichert, die beispielsweise durch Vermessung des Meßkopfes 12 bestimmt wurden. Die Daten zur Abstandsabhängigkeit können wahlweise als numerische Daten oder vereinfacht als funktionaler Zusammenhang oder als Parameter desselben gespeichert werden. Anhand der vorbekannten Abstandsabhängigkeit der Dickenmessungen und des von der optischen Abstandsmeßeinrichtung 28 bestimmten Abstandes D wird von der Dickenmeßeinrichtung 21, 24 mit hoher Genauigkeit die kapazitive Dickenmessung der Folie 10 durchgeführt.

Figur 3 illustriert schematisch das Meßprinzip der Abstandsmeßeinrichtung 28, bei der es sich um eine chromatische Abstandsmeßeinrichtung handelt. Das Prinzip einer chromatischen Abstandsmessung ist an sich bekannt, und eine chromatische Abstandsmeßeinrichtung mit einer über ein Glasfaserkabel angeschlossenen Sensoroptik ist beispielsweise kommerziell erhältlich. Beispielsweise erzeugt eine Weißlichtquelle 30 (Fig. 1) Licht unterschiedlicher Spektralbereiche, welches durch Linsen oder Mehrfachlinsen 32 in verschiedenen Brennpunkten unterschiedlicher Brennweite vor der Sensoroptik 28a fokussiert wird, wie in Figur 3 durch Strahlenkegel 36 angedeutet ist. Aufgrund der je nach Abstand D zwischen Meßkopf 12 und der Oberfläche der Folie 10 unterschiedlich stark an der Oberfläche der Folie 10 reflektierten Wellenlängen kann aus der von der Abstandsmeßeinrichtung 28 detektierten spektralen Intensität der Abstand D mit sehr hoher Genauigkeit bestimmt werden. Das Glasfaserkabel 28b weist viele dünne Lichtleiter auf, wobei ein Teil der Lichtleiter zur Leitung des Lichtes zur Folie und ein anderer Teil der Lichtleiter zur Rückführung des reflektierten Lichtes genutzt wird.

Zwischen der Sensoroptik 28a und der Meßöffnung 26 befindet sich ein Meßraum 44, durch den der Lichtweg zwischen der Sensoroptik 28a und der Meßöffnung 26 verläuft. Um eine Verunreinigung der Meßöffnung 26 sowie des Meßraumes 44 und der daran angrenzenden Linse 32 zu verhindern, ist der Meßraum 44 mit der Drucklufteraeugungseinrichtung 16 verbunden, so daß auch durch die Meßöffnung 26 Druckluft austritt. Dadurch wird im Meßraum 44 stets ein gegenüber dem Bereich vor dem Meßkopf 12 leicht erhöhter Luftdruck aufrechterhalten, so daß keine Verunreinigung durch die Meßöffnung 26 eintritt.

Mit dem erfindungsgemäßen Meßkopf 12 können Foliendicken mit sehr hoher Genauigkeit bestimmt werden, wobei ein typischer Abstand D beispielsweise 100 µm ± 50 µm betragen kann. Je nach Aufbau der optischen Abstandsmeßeinrichtung 28 können Positionsänderungen der Folie 10 in einem Bereich von beispielsweise bis zu 300 µm exakt erfaßt werden. Aufgrund dieses relativ großen Erfassungsbereiches der optischen Abstandsmeßeinrichtung 28 reicht die von dem Luftkissen bewirkte Selbstregulierung des Abstandes D zwischen der Folie 10 und dem Meßkopf 12 auch bei einem Schwanken oder Flattern der Folie 10 aus, die Dicke der Folie 10 stets zuverlässig ermitteln zu können. Besonders vorteilhaft ist hierbei die enge räumliche Nähe zwischen dem Meßkondensator 21 und der Meßöffnung 26.

Die chromatische Abstandsmessung ist zudem gegenüber einer Abstandsmessung auf Triangulationsbasis oder auf Interferometriebasis besonders gut in den Meßkopf 12 zu integrieren und ist zudem unempfindlich insbesondere gegenüber einem Winkelversatz der Folienoberfläche.

Die Luftströmung aus der Zufuhröffnung 18 im Luftkissen ist in Figur 3 durch Pfeile symbolisiert.

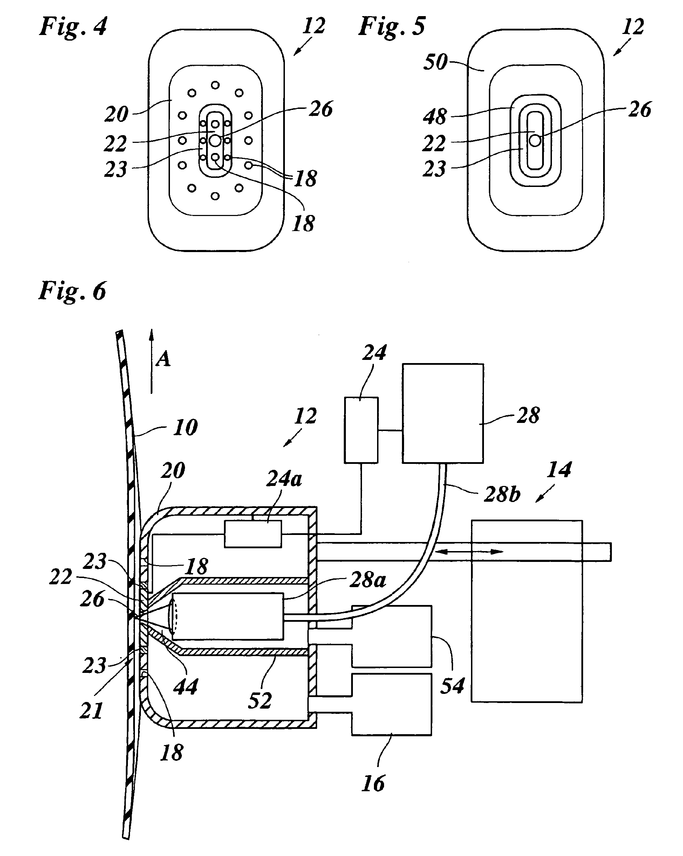

Figur 4 zeigt eine Variante des Meßkopfes 12 aus Figur 2, bei der zusätzliche Druckluft-Zufuhröffnungen 18 in der zweiten Elektrode 22 und in dem Isolator 23 vorhanden sind. Wahlweise können die Zufuhröffnungen 18 auch lediglich am Isolator 23 oder an der inneren Elektrode 22 angeordnet sein. Es sind beliebige Kombinationen der Anordnung der Zufuhröffnung 18 denkbar.

Figur 5 zeigt eine Ausführungsform, bei dem die erste Elektrode des Meßkondensators 21 durch eine Ringelektrode 48 gebildet wird, die in ein isolierendes Gehäuse 50 des Meßkopfes 12 eingelassen ist. Das Gehäuse 50 ist auf seiner Vorderseite aus einem mikroporösen Material gefertigt, beispielsweise einer Keramik. Durch die Poren des Materials, die als Luft-Zufuhröffnungen dienen, wird die Druckluft besonders gleichmäßig auf der Vorderseite des Meßkopfes 12 abgegeben. Das Luftkissen und somit der Abstand D ist dadurch besonders homogen.

Figur 6 zeigt eine weitere Ausführungsform des Meßkopfes 12, bei dem der Meßraum 44 innerhalb des Meßkopfes 12 mit einer separaten Kapselung 52 versehen ist. Die Kapselung schließt beispielsweise die Sensoroptik 28a ein. Das Innere der Kapselung 52 ist mit einer zweiten Drucklufterzeugungseinrichtung 54 verbunden. Auf diese Weise kann der Druck in dem Meßraum 44 separat eingestellt werden. Beispielsweise kann der Druck im Meßraum 44 gegenüber dem Druck außerhalb der Kapselung 52 verringert sein, so daß am optischen Meßort vor der Meßöffnung 26 die Folie 10 nicht durch die aus der Meßöffnung 26 austretende Druckluft übermäßig vom Meßkopf 12 weg gedrückt wird. Auch kann dem Meßraum 44 besonders reine Druckluft zugeführt werden.

Anstelle einer separaten Kapselung 52 kann beispielsweise auch eine dünne Glasscheibe in die Meßöffnung 26 eingesetzt werden, um eine Verunreinigung zu vermeiden. Dies ist in Figur 3 durch eine gestrichelte Linie angedeutet. Eine solche Glasscheibe ist bei Bedarf von außen zur Reinigung zugänglich.

Die in den Ausführungsbeispielen beschriebenen Anordnungen der Elektroden des Meßkondensators 21 stellen lediglich mögliche Beispiele dar, bei denen sich die Elektroden in einem annähernd ovalen Ringspalt gegenüberstehen. Die Elektroden können sich aber beispielsweise auch entlang eines zickzackförmigen Kondensatorspaltes gegenüberstehen, so daß die wirksame Länge des Kondensatorspaltes bei begrenzter Fläche des Meßkopfes 12 weiter vergrößert werden kann. Alternativ kann die Form des Kondensators 21 aber auch kreisrund sein. Ferner kann, wie in GB 1 436 698, eine dritte, geerdete Elektrode vorgesehen sein, beispielsweise in einer Schutzringkondensatoranordnung.

Zusätzlich zu den beschriebenen Zufuhröffnungen 18 für die Druckluft kann der Meßkopf 12 auch weitere Zufuhröffnungen im äußeren Bereich seines Gehäuses aufweisen, durch die die Anformung der Folie 10 an den Meßkopf 12 beeinflußt wird. Anstelle eines hohlen Inneren des Meßkopfes 12 kann auch ein Druckluftverteiler im Meßkopf 12 vorgesehen sein.

Wahlweise kann ergänzend bei durchsichtigen oder optisch teilweise durchlässigen Folien die optische Abstandsmeßeinrichtung 28 in einem Meßmodus betrieben werden, bei dem zwei Reflektionspeaks ausgewertet werden, die von der Vorderseite und der Rückseite der Folie 10 stammen. Auf diese Weise kann ergänzend eine rein optische Dickenmessung der Folie erfolgen, wobei die Präzision im nm-Bereich liegt.

In einem besonderen Betriebsmodus der Meßeinheit 24 und der optischen Abstandsmeßeinrichtung 28 können dabei die in der Meßeinheit 24 gespeicherten Daten zur Abstandsabhängigkeit der kapazitiven Dickenmessungen anhand wiederholter optischen Dickenmessungen korrigiert oder angeglichen werden. Die optische Abstandsmessung kann sehr schnell durchgeführt werden, beispielsweise mit einer Frequenz von 1000 Meßwerten pro Sekunde. Das beschriebene Korrigieren oder Angleichen der Daten zur Abstandsabhängigkeit der kapazitiven Dickenmessungen ist insbesondere sinnvoll, wenn beispielsweise im Betrieb des Meßkopfes der Meßkopf 12 oder die Zufuhröffnungen 18 allmählich verschmutzen und sich die Aerodynamik der Luftströmung ändert.

## Patentansprüche

1. Verfahren zur Messung von Dicken einer Folie (10), eines Filmes oder einer Materiallage mit Hilfe eines Meßkopfes (12), der beabstandet zu der Folie (10) angeordnet wird und mit dem eine kapazitive Dickenmessung vorgenommen wird, wobei mit einer Abstandsmeßeinrichtung (28) eine optische Abstandsmessung erfolgt**, dadurch gekennzeichnet, daß** ein bei der optischen Abstandsmessung bestimmter Abstand (D) unter Berücksichtigung einer vorbekannten Abstandsabhängigkeit der Dikkenmessungen bei der kapazitiven Dickenmessung in die Messung der Foliendicke eingeht.

2. Verfahren nach Anspruch 1, **dadurch gekennzeichnet, daß** der Meßkopf (12) einseitig an der zu vermessenden Folie (10) angeordnet wird.

3. Verfahren nach einem der vorstehenden Ansprüche, **dadurch gekennzeichnet, daß** in dem Zwischenraum zwischen dem Meßkopf (12) und der Folie (10) ein Gas- oder Luftkissen erzeugt wird.

4. Verfahren nach einem der vorstehenden Ansprüche, **dadurch gekennzeichnet, daß** die Abstandsmessung durch den Meßkopf (12) hindurch erfolgt.

5. Verfahren nach einem der vorstehenden Ansprüche, **dadurch gekennzeichnet, daß** die optische Abstandsmessung eine chromatische Abstandsmessung ist.

6. Verfahren nach einem der vorstehenden Ansprüche, **dadurch gekennzeichnet, daß** bei der optischen Abstandsmessung eine optische Dickenmessung der Folie (10) vorgenommen wird und mit den aus der optischen Dickenmessung bestimmten Werten der Foliendicke eine Korrektur von Daten zur Abstandsabhängigkeit der kapazitiven Dickenmessung erfolgt, und daß die Daten zur Abstandsabhängigkeit der kapazitiven Dickenmessung in die kapazitive Messung der Foliendicke eingehen.

7. Vorrichtung zur Messung von Dicken einer Folie (10), eines Filmes oder einer Materiallage, mit einem Meßkopf (12), der eine kapazitive Dickenmeßeinrichtung (21, 24) zur Messung der Dicke der Folie (10) aufweist, und mit einer Abstandsmeßeinrichtung (28) zur Messung eines Abstandes (D) zwischen dem Meßkopf (12) und der Folie (10), wobei die Abstandsmeßeinrichtung (28) eine optische Abstandsmeßeinrichtung (28) ist**, dadurch gekennzeichnet, daß** die Dickenmeßeinrichtung (21, 24) dazu ausgebildet ist, den durch die optischen Abstandsmeßeinrichtung (28) bestimmten Abstand (D) unter Berücksichtigung einer vorbekannten Abstandsabhängigkeit der Dickenmessungen in die Messung der Foliendicke einzubeziehen.

8. Vorrichtung nach Anspruch 7, **dadurch gekennzeichnet, daß** der Meßkopf (12) mindestens eine Zufuhröffnung (18) für Gas oder Luft zur Erzeugung eines Gas- oder Luftkissens zwischen dem Meßkopf (12) und der Folie (10) aufweist.

9. Vorrichtung nach Anspruch 7 oder 8, **dadurch gekennzeichnet, daß** mindestens eine Sensoroptik der Abstandsmeßeinrichtung (28) in den Meßkopf (12) integriert ist.

10. Vorrichtung nach einem der Ansprüche 7 bis 9, **dadurch gekennzeichnet, daß** die optische Abstandsmeßeinrichtung (28) eine chromatische Abstandsmeßeinrichtung ist.

11. Vorrichtung nach einem der Ansprüche 7 bis 10, **dadurch gekennzeichnet, daß** der Meßkopf (12) eine Meßöffnung (26) aufweist, hinter der ein Meßraum (44) der optischen Abstandsmeßeinrichtung (28) angeordnet ist, wobei der Meßraum (44) eine Einrichtung (16; 54) zur Zuführung von Gas oder Luft zum Spülen der Meßöffnung (26) aufweist.

12. Vorrichtung nach einem der Ansprüche 7 bis 11, **dadurch gekennzeichnet,**
- **daß** die optische Abstandsmeßeinrichtung (28) dazu ausgebildet ist, als optische Dickenmeßeinrichtung zu arbeiten,
- **daß** in der kapazitiven Dickenmeßeinrichtung (21, 24) Daten zur Abstandsabhängigkeit der kapazitiven Dickenmessung gespeichert sind,
- **daß** die Dickenmeßeinrichtung (21, 24) dazu ausgebildet ist, mit durch die als optische Dickenmeßeinrichtung arbeitende optische Abstandsmeßeinrichtung (28) bestimmten Dicken die Daten zur Abstandsabhängigkeit der kapazitiven Dickenmessung zu korrigieren,
- und **daß** die Dickenmeßeinrichtung (21, 24) dazu ausgebildet ist, die Daten zur Abstandsabhängigkeit der kapazitiven Dickenmessung in die Messung der Foliendikke einzubeziehen.

## Claims

1. Method for measuring thicknesses of a film (10), a foil or a material layer with a measuring head (12) which is spaced away from the film (10) and is used for a capacitive thickness measurement, wherein an optical distance measurement is performed with a distance measuring device (28), **characterised in that**, taking a predetermined distance dependency of the thickness measurements into account, a distance (D) determined by the optical distance measurement is utilised for determining the film thickness in the capacitive thickness measurement step.

2. Method according to claim 1, **characterised in that** the measuring head (12) is arranged on one side of the film (10) to be measured.

3. Method according to any of the preceding claims, **characterised in that** a gas or air cushion is created in a space intervening between the measuring head (12) and the film (10).

4. Method according to any of the preceding claims, **characterised in that** the distance measurement is performed through the measuring head (12).

5. Method according to any of the preceding claims, **characterised in that** the optical distance measurement is a chromatic distance measurement.

6. Method according to any of the preceding claims, **characterised in that**, in the optical distance measurement, an optical thickness measurement of the film (10) is performed, data relating to the distance dependency of the capacitive thickness measurement are corrected on the basis of values obtained by the optical thickness measurement, and said data relating to the distance dependency of the capacitive thickness measurement are utilised in the capacitive measurement of the film thickness.

7. Apparatus for measuring thicknesses of a film (10), a foil or a material layer, comprising a measuring head (12) which includes a capacitive thickness measuring device (21, 24) for measuring the thickness of the film (10), and a distance measuring device (28) for measuring a distance (D) between the measuring head (12) and the film (10), wherein distance measuring device (28) is an optical distance measuring device (28), **characterised in that** the thickness measuring device (21, 24) is adapted to utilise, in determining the film thickness, said distance (D) as determined by the thickness measuring device (28) in consideration of a predetermined distance dependency of the thickness measurements.

8. Apparatus according to claim 7, **characterised in that** the measuring head (12) has at least one supply opening (18) for gas or air for creating a gas or air cushion between the measuring head (12) and the film (10).

9. Apparatus according to claims 7 or 8. **characterised in that** at least one optical sensor unit of the distance measuring device (28) is integrated in the measuring head (12).

10. Apparatus according to any of the claims 7 to 9. **characterised in that** the optical distance measuring device (28) is a chromatic distance measuring device.

11. Apparatus according to any of the claims 7 to 10, **characterised in that** the measuring head (12) has a detection aperture (26) and a detection space (44) of the optical distance measuring device arranged behind said detection aperture, said detection space (44) having a device (16; 54) for supplying gas or air for scavenging the detection aperture (26).

12. Apparatus according to any of the claims 7 to 11, **characterised in that**
- the optical distance measuring device (28) is adapted to operate as an optical thickness measuring device,
- the capacitive thickness measuring device (21, 24) stores data relating to the distance dependency of the capacitive thickness measurement,
- the thickness measuring device (21, 24) is adapted to correct the data relating to the distance dependency of the capacitive thickness measurement on the basis of thicknesses as determined by the optical distance measuring device (28) operated as an optical thickness measuring device, and
- the thickness measuring device (21, 24) is adapted to determine the film thickness in accordance with said data relating to the distance dependency of the capacitive thickness measurement.

## Revendications

1. Procédé de mesure d'épaisseurs d'une feuille (10), d'une pellicule ou d'une couche d'un matériau à l'aide d'une tête de mesure (12) qui est disposée à distance de la feuille (10) et au moyen duquel on procède à une mesure d'épaisseur capacitive, une mesure de distance optique s'effectuant au moyen d'un dispositif de mesure de distance (28), **caractérisé en ce qu'**une distance (D), déterminée lors de la mesure de distance optique, entre dans la mesure de l'épaisseur de feuille, en tenant compte d'une dépendance connue des mesures d'épaisseur à l'égard de la distance, lors de la mesure d'épaisseur capacitive.

2. Procédé selon la revendication 1, **caractérisé en ce que** la tête de mesure (12) est disposée sur un côté de la feuille (10) à mesurer.

3. Procédé selon l'une quelconque des revendications précédentes, **caractérisé en ce qu'**un coussin de gaz ou d'air est produit dans l'espace compris entre la tête de mesure (12) et la feuille (10).

4. Procédé selon l'une quelconque des revendications précédentes, **caractérisé en ce que** la mesure de distance s'effectue par la tête de mesure (12).

5. Procédé selon l'une quelconque des revendications précédentes, **caractérisé en ce que** la mesure de distance optique est une mesure de distance chromatique.

6. Procédé selon l'une quelconque des revendications précédentes, **caractérisé en ce que** lors de la distance de mesure optique il est procédé à une mesure d'épaisseur optique de la feuille (10), et avec les valeurs de l'épaisseur de feuille, déterminées à partir de la mesure d'épaisseur optique, il est procédé à une correction de données pour la dépendance de la mesure d'épaisseur capacitive à l'égard de la distance, et **en ce que** les données pour la dépendance de la mesure d'épaisseur capacitive à l'égard de la distance, entrent dans la mesure capacitive de l'épaisseur de feuille.

7. Dispositif pour la mesure d'épaisseurs d'une feuille (10), d'une pellicule ou d'une couche d'un matériau, avec une tête de mesure (12) qui comporte un dispositif de mesure d'épaisseur capacitive (21, 24) pour la mesure de l'épaisseur de la feuille (10), et avec un dispositif de mesure de distance (28) pour mesurer une distance (D) entre la tête de mesure (12) et la feuille (10), le dispositif de mesure de distance (28) étant un dispositif de mesure de distance optique (28), **caractérisé en ce que** le dispositif de mesure d'épaisseur (21, 24) est réalisé pour faire entrer dans la mesure de l'épaisseur de feuille la distance (D), déterminée par le dispositif de mesure de distance optique (28), en tenant compte d'une dépendance connue des mesures d'épaisseur à l'égard de la distance.

8. Dispositif selon la revendication 7, **caractérisé en ce que** la tête de mesure (12) comporte au moins une ouverture d'amenée (18) pour un gaz ou l'air, afin de produire un coussin de gaz ou d'air entre la tête de mesure (12) et la feuille (10).

9. Dispositif selon la revendication 7 ou 8, **caractérisé en ce qu'**au moins une optique de capteur du dispositif de mesure de distance (28) est intégrée dans la tête de mesure (12).

10. Dispositif selon l'une quelconque des revendications 7 à 9, **caractérisé en ce que** le dispositif de mesure de distance optique (28) est un dispositif de mesure de distance chromatique.

11. Dispositif selon l'une quelconque des revendications 7 à 10, **caractérisé en ce que** la tête de mesure (12) présente une ouverture de mesure (26) derrière laquelle est disposé un compartiment de mesure (44) du dispositif de mesure de distance optique (28), le compartiment de mesure (44) comportant un dispositif (16 ; 54) pour l'amenée de gaz ou d'air afin de laver l'ouverture de mesure (26).

12. Dispositif selon l'une quelconque des revendications 7 à 11, **caractérisé**
- **en ce que** le dispositif de mesure de distance optique (28) est conçu pour fonctionner comme dispositif de mesure d'épaisseur optique,
- **en ce que** dans le dispositif de mesure d'épaisseur capacitive (21, 24) sont mémorisées des données relatives à la dépendance de la mesure d'épaisseur capacitive à l'égard de la distance,
- le dispositif de mesure d'épaisseur (21, 24) est conçu pour corriger les données relatives à la dépendance de la mesure d'épaisseur capacitive à l'égard de la distance, avec des épaisseurs déterminées par le dispositif de mesure de distance optique (28) fonctionnant comme dispositif de mesure d'épaisseur optique,
- et **en ce que** le dispositif de mesure d'épaisseur (21, 24) est conçu pour faire entrer les données relatives à la dépendance de la mesure d'épaisseur capacitive à l'égard de la distance, dans la mesure de l'épaisseur de feuille.
